# EUROPÄISCHE PATENTSCHRIFT

(11) **EP 0 908 062 B1**
(45) Veröffentlichungstag und Bekanntmachung des Hinweises auf die Patenterteilung: **24.07.2002**
(21) Anmeldenummer: 97915296.4
(22) Anmeldetag: 20.02.1997
(51) Int. Cl.: H04Q 7/22

(54) **VERFAHREN ZUR SEPARIERUNG UND KENNZEICHNUNG VON GESPROCHENEN DURCHSAGEN BEI EINER FUNKÜBERTRAGUNG**
PROCESS FOR SEPARATING AND CHARACTERISING SPOKEN ANNOUNCEMENTS IN A RADIO TRANSMISSION
PROCEDE POUR SEPARER ET IDENTIFIER DES INFORMATIONS VERBALES DANS UNE TRANSMISSION RADIO

(30) Priorität: 25.06.1996 DE 19625429
(43) Veröffentlichungstag der Anmeldung: 14.04.1999
(73) Patentinhaber: SIEMENS AKTIENGESELLSCHAFT, 80333 München (DE)
(72) Erfinder: KYNAST, Andreas, D-31139 Hildesheim (DE); VAHLE, Andreas, D-31139 Hildesheim (DE); AHRENS, Oliver, D-31199 Diekholzen (DE); KERSKEN, Ulrich, D-31199 Diekholzen (DE); HEMPEL, Karin, D-31135 Hildesheim (DE)
(86) Internationale Anmeldenummer: DE9700309
(87) Internationale Veröffentlichungsnummer: WO9750265

(56) Entgegenhaltungen:
- EP-A- 0 686 909
- US-A- 5 146 612
- GIDLOW A C: "DATA SERVICES ON PCN" COLLOQUIUM ON ROAMING WITH DATA, 6.März 1995, Seiten 1/03-8/03, XP000672071

## Beschreibung

### Stand der Technik

Die Erfindung geht aus von einem Verfahren zur Separierung und Kennzeichnung von gesprochenen Durchsagen aus dem Audiostrom bei einer Funkübertragung nach der Gattung des Hauptanspruchs.

Bekannt sind Verfahren zur Übertragung von Durchsagen und ihrer selektiven Wiedergabe über das Radiodatensystem (RDS). Für die Übertragung von Nachrichten über das Mobilfunknetz ist der Standard nach GSM (Global System for Mobile Communication) unter European Digital Cellular Telecommunication System ETSI festgelegt. Die digitalen Signale im Short Message Channel (SMS) werden in Draft pr ETS 300536, August 1995 und Draft pr ETS 300537, März 1995 definiert. Die Übertragung der SMS erfolgt parallel, aber asynchron zum Audiodatenstrom.

Aus EP-A-0 689 909 ist ein System bekannt, bei dem zur Korrekten, sowie synchronisierten wiedergabe von sprach- und zugehörigen Dateninformationen die Information jeweils mit einem Zeitstempel versehen wird.

### Vorteile der Erfindung

Das erfindungsgemäße Verfahren zur Separierung und Kennzeichnung von gesprochenen Durchsagen mit den kennzeichnenden Merkmalen des Hauptanspruchs hat demgegenüber den Vorteil, daß Durchsageblöcke mit einzelnen Durchsagen gesendet werden, denen eine Identifikationszahl zugeordnet wird und so eine eindeutige Zuordnung der Durchsagen zu den Informationen im zugehörigen digitalen Signal möglich wird, das die Daten zur Selektion der Durchsagen im Empfänger übermittelt.

Durch die in den Unteransprüchen aufgeführten Maßnahmen sind vorteilhafte Weiterbildungen und Verbesserungen des im Hauptanspruch angegebenen Verfahrens möglich.

Bei der Übertragung von Durchsagen und digitalen Signalen über das Mobilfunknetz wird vorteilhafterweise der GSM (Global System for Mobil communication) Standard verwendet. Dieser Standard ermöglicht gesprochene Verkehrsdurchsagen über einen Sprachkanal zu übertragen, während die digitalen Signale in einem GSM-Steuerungs/Signalisierungskanal parallel dazu übertragen werden.

Vorteilhafterweise werden die digitalen Signale im Short Message Service (SMS)-Kanal übertragen.

Die Identitifikationszahl kann vorteilhafterweise eine in Sendereihenfolge aufsteigende Ziffernfolge sein, so daß z.B. Block 2, dann dem digitalen Signal 2, unabhängig von der Empfangszeit, entspricht.

Um eine Durchsage im Empfänger zu separieren, muß der Empfänger den Beginn und das Ende der Durchsage erkennen, was mit einem Detektorsystem erfolgen kann.

Vorteilhafterweise wird dabei die Länge der Pause zwischen zwei gesprochenen Durchsagen gemessen, wobei die Länge dieser Pause von der Dauer der gesprochenen Durchsage abhängt. Um die Pause minimal zu halten, wird die Länge der Durchsage mit einem Faktor F multipliziert, der dem Sender und dem Empfänger bekannt ist.

Dadurch ist es möglich, eine Durchsage als korrekt einzuordnen und zu speichern, wenn nach Ende der Durchsage eine Pause mit der berechneten Dauer folgt.

Vorteilhafterweise wird Beginn und Ende der Übertragung sowie ein Fehler bei der Übertragung vom Empfänger erkannt und signalisiert, indem ein festgespeichertes Tonsignal an den Sender geschickt wird.

Vorteilhaft ist es auch, den Beginn und das Ende einer gesprochenen Durchsage durch Tonsignale des Senders an den Empfänger zu markieren.
Die Kommunikation zwischen Sender und Empfänger erfolgt dabei z. B. über einen Tonmarker.
Als Rückantwort und Bestätigung einer korrekten Übertragung einer Durchsage werden Tonfolgen, z.B. Dual Tone Multi Frequency-Signale an den Sender geschickt. Die Tonsignale teilen die Identifikationszahl der letzten korrekten Durchsage mit. Das hat den Vorteil, daß dadurch nur korrekte Durchsagen im Empfänger gespeichert werden, andernfalls eine erneute Folge von Durchsagen an den Empfänger gesendet wird.

Ein vorteilhaftes Verfahren stellt die Separierung von Durchsagen in einem festen Zeitraster dar. Dabei geht jedem Durchsageblock ein digitales Signal mit Informationen über die Dauer der einzelnen Durchsagen voraus. Nach einem erfolgreichen Verbindungsaufbau erwartet der Empfänger den Beginn des Durchsageblocks zum nächsten Zeitpunkt, der im gemeinsamen Zeitraster von Sender und Empfänger vorgegeben ist.

### Zeichnung

Ausführungsbeispiele der Erfindung sind in den Zeichnungen dargestellt und in der nachfolgenden Beschreibung näher erläutert. Es zeigt Figur 1 den zeitlichen Verlauf von Durchsagen und dazugehörigen Pausen, Figur 2 den zeitlichen Verlauf bei der Kommunikation mit dem Empfänger, Figur 3 den Kommunikationsaufbau mit Tonsignalen, und Figur 4 den Kommunikationsablauf mit einem festen Zeitraster.

### Beschreibung der Ausführungsbeispiele

Bisher werden im allgemeinen die Verkehrsdurchsagen über Radiosender verbreitet. Dabei erfolgt bei geeigneten Empfängern im Kraftfahrzeug eine Selektion, z.B. mittels TMC, der Durchsagen, die den gerade aktuell befahrenen Straßen zugeordnet werden können. Setzt man dagegen Mobilfunk ein, wird die Verkehrsnachricht individuell vom Empfänger angefordert und steht somit auch unabhängig von Radiosendezeiten zur Verfügung. Dazu fragt der Autofahrer beim Sender gezielt nach Durchsagen an, die seine Strecke betreffen. Der Sender überträgt einen Durchsageblock, der Empfänger selektiert mithilfe von digitalen Signalen, die für den Fahrer relevanten Angaben der einzelnen Durchsagen. Bei der Verwendung der GSM-Standards für die Übertragung von gesprochenen Durchsagen und digitalen Signalen im Mobilfunk sind der Aufbau und die Codierung der digitalen Signale in Draft pr. ETS 300 536, August 1995 und Draft pr. ETS 300 537, März 1995 festgelegt. Die gesprochenen Durchsagen werden im GMS-Sprachkanal übertragen und müssen den digitalen Signalen, die in einem GSM-Steuerungs-Signalisierungskanal übertragen werden so synchronisiert werden, daß im Empfänger (MS: Mobile Station) eine selektive Sprach- und/oder Textausgabe einzelner Durchsagen möglich ist. Bei der Anforderung von Sprachinformation über den GSM-Sprachkanal werden parallel, aber asynchron, mittels Short Message Service (SMS) diese Informationen auch über einen Datenkanal übertragen. Da aber nicht sichergestellt werden kann, daß beide Informationsströme synchron verlaufen werden, die Short Message (SM) läuft noch über ein Short Message Service Center (SMSC), kann der Datenkanal nicht zur Synchronisierung verwendet werden. Eine Synchronisierung ist notwendig, damit eine Separierung einzelner Durchsagen aus dem Audiostrom möglich ist und die Zuordnung der Daten einer Durchsage (aus der SMS) zur Durchsage selbst erfolgen kann.

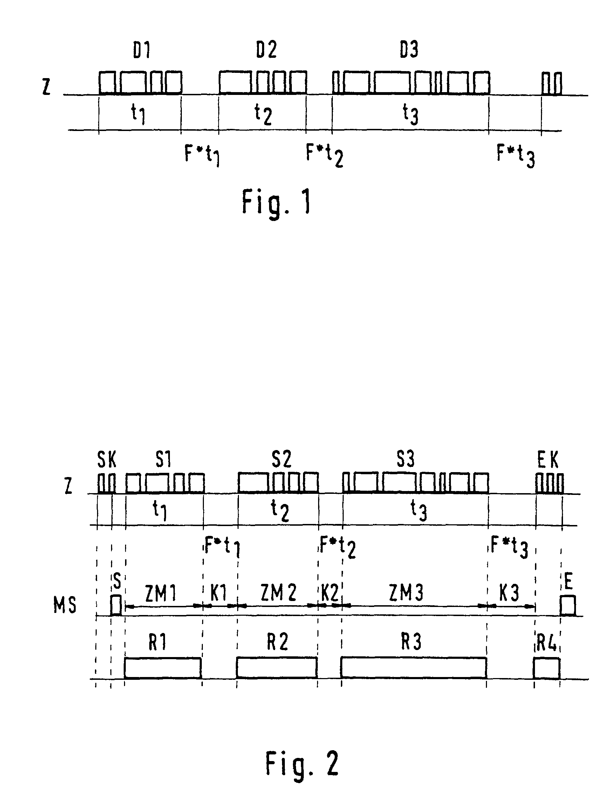

Figur 1 zeigt den Sprachkanal der Zentrale, mit verschiedenen Durchsagen D1 bis D3. Durchsagen enthalten kleine Pausen, die Sprachpausen im gesprochenen Text darstellen sollen. Die Zentrale Z berechnet aus der Durchsagedauer t₁ der ersten Durchsage eine Pausenzeit mit dem Faktor F. Die Zentrale fügt beim Versenden der Durchsage die berechnete Pausenlänge F*t₁ an die Durchsage an. Der Faktor F sorgt für minimale Pausenzeiten und ist Zentrale und Empfänger bekannt.

Figur 2 zeigt den Ablauf der Übertragung einer Durchsage. Als erstes sendet die Zentrale eine Startkennung SK. Der Empfänger antwortet nach der Erkennung der Startkennung SK mit einem Startsignal S, das er an die Zentrale sendet. Der Empfänger hat die Möglichkeit den Beginn und das Ende der Durchsagen aus dem Audiostrom mit Hilfe eines internen Detektors zu erkennen. Für die Detektion des Durchsagebeginns kann man einen Schwellwertdetektor, z.B. einen Stimmdetektor einsetzen. Der Detektor im Empfänger MS erkennt den Beginn der ersten Durchsage und startet die Aufnahme R1. Nach Empfang und Erkennung einer Durchsage und der folgenden Pause in der Empfängerstation MS, mißt der Empfänger zum einen die Durchsagedauer ZM1 und zum anderen die Pausendauer K1. Der Empfänger überprüft, ob die Bedingung K1 = F*ZM1 erfüllt ist. Ist diese Bedingung erfüllt, so wird diese Durchsage als richtig und korrekt übertragen erkannt und damit separiert. So wird auch mit allen weiteren Durchsagen verfahren. Jeder separierten Durchsage wird entsprechend der zeitlichen Reihenfolge eine Identifikationszahl ID gegeben. Über den digitalen Kanal wird parallel eine SMS mit den Daten aller Durchsagen eines Durchsageblocks übertragen. Da die Reihenfolge der Durchsagen innerhalb eines Audiostroms mit der Reihenfolge der Informationen in der SMS identisch ist, kann anhand der Identifikationszahl ID die Zuordnung von Durchsage zu Daten vorgenommen werden. Empfängt der Empfänger MS anstatt einer Durchsage die Endkennung EK, dann antwortet er mit dem Endsignal E. Die angefangene Aufnahme, in Figur 2 die Aufnahme R4, wird verworfen und die Übertragung beendet. Die Start- und Endkennungen (SK, EK) muß ein Signal sein, das der Detektor im Empfänger von den Durchsagen durch Frequenz, Pegel und/oder Dauer unterscheiden kann. Die Start-, Ende- und Störsignale (S, E, N) des Empfängers werden z.B. im Empfänger selbst erzeugt und können vorteilhafterweise als Tonsequenzen im Sprachspeicher abgelegt werden. Alternativ ist auch eine Übertragung der Tonsignale beim Verbindungsaufbau durch den Sender denkbar.

Tritt bei der Übertragung der Durchsagen ein Fehler auf, wird z. B. die Pausenzeit nicht korrekt erfüllt, sendet der Empfänger ein Störsignal N an den Sender und fordert damit eine Wiederholung dieser Durchsage an.

Ein weiteres vorteilhaftes Ausführungsbeispiel der Erfindung wählt zur Separierung der gesprochenen Durchsagen ein Handshake-Verfahren, das den Beginn und das Ende der gesprochenen Durchsagen eines Durchsageblocks mit Hilfe von Tonfolgen markiert. Dazu werden zusätzliche Kommunikationssignale zwischen der Zentrale und dem Empfänger eingesetzt. Im Downlink (Kommunikation von Zentrale zum Empfänger MS) wird ein Tonmarker als Kommunikationssignal verwendet. Im Uplink (Kommunikation von Empfänger MS zur Zentrale) wird das Dual Tone Multi Frequency-Verfahren (DTMF) zur Signalisierung angewendet. Das Versenden von DTMF im Uplink ist in der Spezifikation von digitalen Funknetzen nach der GSM vorgesehen.

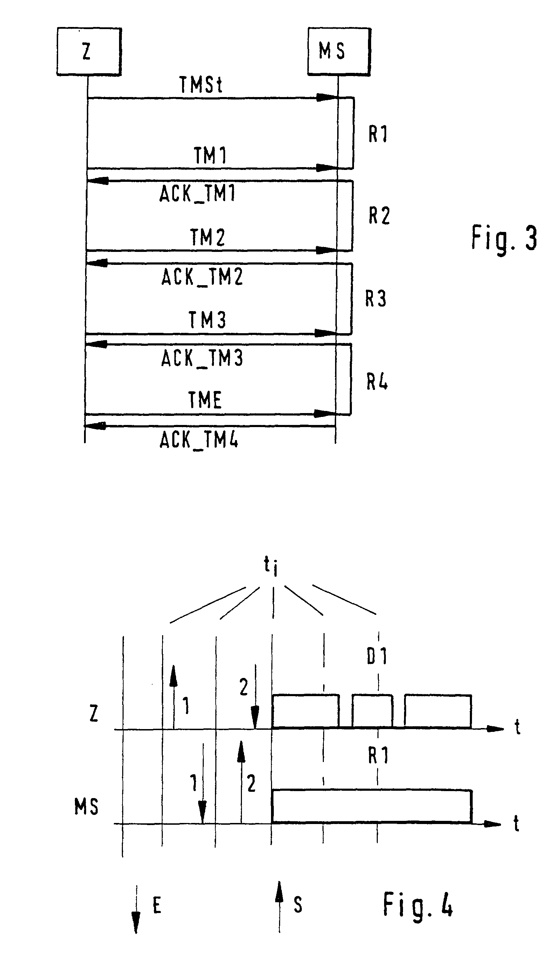

Figur 3 zeigt den zeitlichen Ablauf der Kommunikation der Zentrale Z mit dem Empfänger MS. Nach dem Verbindungsaufbau sendet die Zentrale einen Tonmarker TMSt als Startkennung. Der Empfänger erkennt den Beginn der ersten Durchsage des Durchsageblocks und startet die Aufnahme R1. Am Ende einer Durchsage sendet die Zentrale den Tonmarker TM1. Der Empfänger stoppt die Aufzeichnung und beantwortet das Signal mit einem DTMF-Acknowledgment (ACK_TMᵢ). Zugleich mit dem Absenden des Acknowledgment-Signals wird die Sprachaufzeichnung erneut gestartet. Beim letzten Sprachsegment sendet die Zentrale den Tonmarker TME, auf den der Empfänger mit einem Acknowledgment ACK_TMᵢ (mit i = Nummer der zuletzt übertragenen Durchsage) reagiert. Danach wird die Verbindung beendet. Das Acknowledgment-Signal, das mittels DTMF übertragen wird, entspricht jeweils der Identifikationszahl der gespeicherten Durchsage R. Jeder separierten Durchsage R1 bis Rₙ wird entsprechend der zeitlichen Reihenfolge eine aufsteigende Identifikationszahl gegeben. Da die Reihenfolge der Durchsagen innerhalb eines Audiostroms mit der Reihenfolge der Daten innerhalb der digitalen Signale SMS identisch ist, kann anhand der Identifikationszahl die Zuordnung von Durchsage zu Daten vorgenommen werden.

Eine weitere vorteilhafte Ausbildungsform ermöglicht die Separierung der Durchsagen aus dem Audiostrom aufgrund von Zeitangaben, die vor Beginn des Durchsageblocks über die digitalen Signale dem Empfänger mitgeteilt werden. Zusätzlich unterliegt Sender und Empfänger einem Zeitraster, das z.B. alle 10s einen Zeitpunkt setzt. Die absolute Zeit wird dabei für Sender und Empfänger von einem Funkzeitsignal abgegriffen.
Figur 4 zeigt den zeitlichen Ablauf der Kommunikation zwischen Zentrale Z und Empfänger MS. Nach Figur 4 baut die Zentrale eine Verbindung zum Empfänger MS auf und sendet (S) eine digitale Signaleinheit SMS 1 an den Empfänger und baut die Verbindung wieder ab. Wurde das digitale Signal SMS 1 vom Empfänger korrekt empfangen (E), so baut er eine Verbindung zur Zentrale auf und sendet ein DTMF-Signal 2. Erhält die Zentrale das DTMF-Signal 2, beginnt sie zum nächst möglichen Zeitpunkt im Zeitraster tᵢ mit der Übertragung der Durchsage D1 usw. Zeitgleich beginnt der Empfänger das Durchsagesignal aufzunehmen. Die Pausenzeiten zwischen den einzelnen Durchsagen D1,D2 usw. sind konstant und sowohl Sender als auch Empfänger bekannt. Die Separierung der einzelnen Durchsageblöcke und damit die Aufnahme einzelner Durchsageblöcke R erfolgt parallel zum Empfang aufgrund der mit den digitalen Signalen übertragenen Angaben zur Dauer einer jeden Durchsage des Durchsageblocks und der bekannten Pausenzeit. Der Start der Übertragung der Durchsagen durch die Zentrale und der Start der Aufnahme der Durchsagen im Empfänger erfolgt parallel und wird vom Zeitraster bestimmt. Das Zeitraster enthält Zeitpunkte der aktuellen Zeit, z. B. alle 10 Sekunden. Vor der Übertragung des nächsten Durchsageblocks wird wieder mit einer SMS Informationen zu den einzelnen Durchsagen sowie zu deren Längen übertragen. Die Zuordnung der Durchsagen zu den digitalen Signalen erfolgt wieder mit der Identifikationszahl der Sendereihenfolge.

In erster Linie dient das erfindungsgemäße Verfahren zur Übermittlung von Verkehrsdurchsagen. Es lassen sich jedoch andere Durchsagen damit selektiv empfangen und wiedergeben, z. B. Suchmeldungen oder Katastrophenwarnungen.

## Patentansprüche

1. Verfahren zur Separierung und Kennzeichnung von gesprochenen Durchsagen aus dem Audiostrom in einem Empfänger nach einer Funkübertragung, wobei parallel zum Audiostrom digitale Signale, übertragen werden, **dadurch gekennzeichnet, daß** in einem Durchsageblock einzelne Durchsagen gesendet und im Empfänger mit einer Identifikationszahl versehen werden, und daß die Identifikationszahl die Zuordnung zu den Informationen ermöglicht, die im digitalen, dem Durchsageblock zugeordneten Signal übertragen werden, und daß mithilfe der digitalen Informationen einzelne Durchsagen ausgewählt werden können.

2. Verfahren zur Separierung und Kennzeichnung von gesprochenen Durchsagen nach Anspruch 1, **dadurch gekennzeichnet, daß** die gesprochenen Durchsagen und die digitalen Signale im GSM-Standard übertragen werden.

3. Verfahren zur Separierung und Kennzeichnung von gesprochenen Durchsagen nach Anspruch 1 oder 2, **dadurch gekennzeichnet, daß** die digitalen Signale im Short Message Service-Kanal parallel zum Sprachkanal übertragen werden.

4. Verfahren zur Separierung und Kennzeichnung von gesprochenen Durchsagen nach Anspruch 1 bis 3, **dadurch gekennzeichnet, daß** die Identifikationszahl der Durchsagen in Sendereihenfolge aufsteigend vergeben wird.

5. Verfahren zur Separierung und Kennzeichnung von gesprochenen Durchsagen nach Anspruch 1 bis 4, **dadurch gekennzeichnet, daß** Beginn und Ende einer Durchsage im Empfänger mit einem Detektorsystem erfaßt wird.

6. Verfahren zur Separierung und Kennzeichnung von gesprochenen Durchsagen nach Anspruch 1 bis 5, **dadurch gekennzeichnet, daß** die Länge der Pausen zwischen den gesprochenen Durchsagen über einen dem Empfänger bekannten festen Faktor F mit der Länge der Durchsagen verknüpft ist.

7. Verfahren zur Separierung und Kennzeichnung von gesprochenen Durchsagen nach Anspruch 1 bis 6, **dadurch gekennzeichnet, daß** eine Durchsage aus dem Audiostrom separiert und im Empfänger gespeichert wird, wenn die auf ihn folgende Übertragungspause die berechnete Dauer aufweist.

8. Verfahren zur Separierung und Kennzeichnung von gesprochenen Durchsagen nach Anspruch 1 bis 7, **dadurch gekennzeichnet, daß** Start- End- und Fehlersignale im Empfänger als Tonsignale in einem Speicher hinterlegt werden und daß bei Erkennung einer Start-, End- und Fehlersituation im Empfänger das jeweilige Tonsignal an den Sender abgegeben wird.

9. Verfahren zur Separierung und Kennzeichnung von gesprochenen Durchsagen nach Anspruch 1 bis 8, **dadurch gekennzeichnet, daß** Beginn und Ende von gesprochenen Durchsagen durch Tonsignale markiert werden, die vom Sender an den Empfänger geschickt werden.

10. Verfahren zur Separierung und Kennzeichnung von gesprochenen Durchsagen nach Anspruch 1 bis 9, **dadurch gekennzeichnet, daß** in der Kommunikation zwischen Sender und Empfänger ein Tonmarker den Beginn und das Ende einer Durchsage kennzeichnet.

11. Verfahren zur Separierung und Kennzeichnung von gesprochenen Durchsagen nach Anspruch 1 bis 10, **dadurch gekennzeichnet, daß** in der Kommunikation zwischen Empfänger und Sender ein Tonsignal die Identifikationszahl des erfolgreich empfangenen Durchsage an den Sender rückmeldet.

12. Verfahren zur Separierung und Kennzeichnung von gesprochenen Durchsagen nach Anspruch 1 bis 11, **dadurch gekennzeichnet, daß** in der Kommunikation zwischen Empfänger und Sender ein Dual Tone Multi Frequency-Signal die Identifikationszahl der letzten, korrekt übertragenen Durchsage rückmeldet.

13. Verfahren zur Separierung und Kennzeichnung von gesprochenen Durchsagen nach Anspruch 1 bis 12, **dadurch gekennzeichnet, daß** vor Beginn einer Durchsage ein digitales Signal mit Informationen über die Dauer der nächsten Durchsage gesendet wird.

14. Verfahren zur Separierung und Kennzeichnung von gesprochenen Durchsagen nach Anspruch 1 bis 13, **dadurch gekennzeichnet, daß** der Sender die Übertragung der Durchsage bekannter Dauer zum nächsten Zeitpunkt im festen Zeitraster des Senders/Empfängers beginnt.

## Claims

1. Method for separating and identifying spoken voice messages from the audio stream in a receiver after a radio transmission, where digital signals are transmitted in parallel with the audio stream, **characterized in that** individual voice messages are sent in a voice-message block and are provided with an identification number in the receiver, and **in that** the identification number allows association with the information which is transmitted in the digital signal associated with the voice-message block, and **in that** the digital information can be used to select individual voice messages.

2. Method for separating and identifying spoken voice messages according to Claim 1, **characterized in that** the spoken voice messages and the digital signals are transmitted using the GSM standard.

3. Method for separating and identifying spoken voice messages according to Claim 1 or 2, **characterized in that** the digital signals are transmitted in the short message service channel in parallel with the voice channel.

4. Method for separating and identifying spoken voice messages according to Claim 1 to 3, **characterized in that** the identification number of the voice messages is allocated so as to increase in the order of transmission.

5. Method for separating and identifying spoken voice messages according to Claim 1 to 4, **characterized in that** the start and end of a voice message is detected in the receiver using a detector system.

6. Method for separating and identifying spoken voice messages according to Claim 1 to 5, **characterized in that** the length of the pauses between the spoken voice messages is linked to the length of the voice messages by means of a fixed factor F which is known to the receiver.

7. Method for separating and identifying spoken voice messages according to Claim 1 to 6, **characterized in that** a voice message is separated from the audio stream and is stored in a receiver if the transmission pause following it has the calculated duration.

8. Method for separating and identifying spoken voice messages according to Claim 1 to 7, **characterized in that** start, end and error signals in the receiver are stored as audio signals in a memory, and **in that** the respective audio signal is output to the transmitter if a start, end and error situation is recognized in the receiver.

9. Method for separating and identifying spoken voice messages according to Claim 1 to 8, **characterized in that** the start and end of spoken voice messages are marked by audio signals which are sent to the receiver by the transmitter.

10. Method for separating and identifying spoken voice messages according to Claim 1 to 9, **characterized in that** an audio marker identifies the start and the end of a voice message in the communication between transmitter and receiver.

11. Method for separating and identifying spoken voice messages according to Claim 1 to 10, **characterized in that** an audio signal acknowledges the identification number of the successfully received announcement to the transmitter in the communication between receiver and transmitter.

12. Method for separating and identifying spoken voice messages according to Claim 1 to 11, **characterized in that** a dual tone multifrequency signal acknowledges the identification number of the last correctly transmitted voice message in the communication between receiver and transmitter.

13. Method for separating and identifying spoken voice messages according to Claim 1 to 12, **characterized in that**, before the start of a voice message, a digital signal containing information about the duration of the next voice message is sent.

14. Method for separating and identifying spoken voice messages according to Claim 1 to 13, **characterized in that** the transmitter starts transmitting the voice message of known duration at the next time in the fixed time frame of the transmitter/receiver.

## Revendications

1. Procédé pour séparer et identifier des messages parlés du flux de données audio dans un récepteur après une transmission radio où parallèlement audit flux de données audio des signaux numériques sont transmis, **caractérisé en ce que** différents messages sont envoyés au sein d'un bloc de messages et dotés d'un numéro d'identification dans le récepteur, et **en ce que** le numéro d'identification permet l'attribution aux informations transmises dans le signal numérique attribué au bloc de message et **en ce qu'**au moyen desdites informations numériques, différents messages peuvent être sélectionnés.

2. Procédé pour séparer et identifier des messages parlés selon la revendication 1, **caractérisé en ce que** les messages parlés et les signaux numériques sont transmis en standard GSM.

3. Procédé pour séparer et identifier des messages parlés selon la revendication 1 ou 2, **caractérisé en ce que** les signaux numériques sont transmis dans le canal Short Message Service, parallèlement au canal vocal.

4. Procédé pour séparer et identifier des messages parlés selon les revendications 1 à 3, **caractérisé en ce que** le numéro d'identification des messages est attribué par ordre croissant d'envoi.

5. Procédé pour séparer et identifier des messages parlés selon les revendications 1 à 4, **caractérisé en ce que** le début et la fin d'un message dans le récepteur sont détectés avec un système détecteur.

6. Procédé pour séparer et identifier des messages parlés selon les revendications 1 à 5, **caractérisé en ce que** la longueur des pauses entre les messages parlés est liée à la longueur des messages par un facteur fixe F connu du récepteur.

7. Procédé pour séparer et identifier des messages parlés selon les revendications 1 à 6, **caractérisé en ce qu'**un message est séparé du flux de données audio et mémorisé dans le récepteur si la pause de transmission qui lui succède présente la durée calculée.

8. Procédé pour séparer et identifier des messages parlés selon les revendications 1 à 7, **caractérisé en ce que** des signaux de départ, de fin et d'erreur dans le récepteur sont déposés comme signaux sonores dans une mémoire et **en ce qu'**en cas d'identification d'une situation de départ, de fin et d'erreur dans le récepteur, le signal sonore respectif est envoyé à l'émetteur.

9. Procédé pour séparer et identifier des messages parlés selon les revendications 1 à 8, **caractérisé en ce que** le début et la fin de messages parlés sont marqués par des signaux sonores envoyés par l'émetteur au récepteur.

10. Procédé pour séparer et identifier des messages parlés selon les revendications 1 à 9, **caractérisé en ce que** dans la communication entre émetteur et récepteur, un marqueur sonore identifie le début et la fin d'un message.

11. Procédé pour séparer et identifier des messages parlés selon les revendications 1 à 10, **caractérisé en ce que** dans la communication entre récepteur et émetteur, un signal sonore accuse réception à l'émetteur du numéro d'identification du message correctement reçu.

12. Procédé pour séparer et identifier des messages parlés selon les revendications 1 à 11, **caractérisé en ce que** dans la communication entre récepteur et émetteur, un signal Dual Tone Multi Frequency accuse réception du numéro d'identification du dernier message correctement transmis.

13. Procédé pour séparer et identifier des messages parlés selon les revendications 1 à 12, **caractérisé en ce que** le début d'un message est précédé de l'envoi d'un signal numérique contenant des informations sur la durée du message suivant.

14. Procédé pour séparer et identifier des messages parlés selon les revendications 1 à 13, **caractérisé en ce que** l'émetteur commence la transmission du message de durée connue au moment le plus tôt dans le créneau temporel fixe de l'émetteur/récepteur.
